# DEMANDE DE BREVET EUROPEEN

(11) **EP 2 273 407 A1**
(43) Date de publication de la demande: **12.01.2011**
(21) Numéro de dépôt: 09305649.7
(22) Date de dépôt: 06.07.2009
(51) Int. Cl.: G06F 21/00

(54) **Sécurisation de localisation d'un code distant à travers l'empreinte du destinataire**

(71) Demandeur: Gemalto SA, 92190 Meudon (FR)
(72) Inventeur: Fournier, Jacques, 13008, Marseille (FR); Gauteron, Laurent, 13700, Marignane (FR); Imoucha, Franck, 13390, Auriol (FR); Charpeignet, Véronique, 83200, Toulon (FR)

(57) **Abrégé**

Procédé de sécurisation des échanges entre deux dispositifs électroniques, en utilisant une empreinte d'au moins un des deux dispositifs. Cette empreinte est obtenue à partir de tout ou partie des composants électroniques qui composent ce dispositif.

Cette empreinte va servir, soit à protéger la confidentialité de la donnée échangée, soit à attester de l'identité du dispositif émetteur de la donnée

## Description

L'invention concerne la sécurisation de localisation d'un code distant à travers l'empreinte du destinataire.

L'invention porte en particulier sur la sécurisation des échanges entre deux dispositifs, lors de l'exécution d'un code distribué.

Les dispositifs électroniques mobiles sont en pleine mutation. En effet, leur capacité de stockage évolue, leur puissance de calcul par unité de taille augmente de même que leur encombrement diminue.

Une nouvelle génération de tels dispositifs a permis de développer un nouveau modèle distribué. Ces dispositifs, couramment appelés Clés Intelligentes, ont la particularité de posséder une mémoire, une intelligence électronique, et un accès à un module électronique sécurisé. Dans la mémoire de ces Clés Intelligentes est enregistré un code informatique exécutable (un ou plusieurs logiciels), qui est destiné à être chargé (à travers l'interface de communication de la Clé Intelligente, souvent USB) sur un autre dispositif électronique hôte dit dispositif d'exécution.

Ce code particulier est couramment appelé CDROM car dans la majorité des cas, ce code est stocké sous forme d'image 'ISO' sur une partition 'Lecture Seule' qui émule un CD-ROM qui sera vu comme tel (c'est à dire à la manière d'un "compact disque") par le dispositif électronique hôte (l'ordinateur).

En général, lorsque la Clé Intelligente est insérée dans un ordinateur, ce dernier la détecte, la reconnait et l'active. La phase d'activation consiste, entre autres, à monter sur le système d'exploitation les différents 'disques' présentés par la Clef Intelligente, dont celui qui contient le CD-ROM. Une fois activée, la Clé Intelligente envoie alors le contenu du CDROM à l'ordinateur qui exécute ledit contenu.

Cette technologie permet de transporter un code exécutable, potentiellement de grande taille, sur un support non figé, et cela à travers une interface de communication USE largement déployée sur les ordinateurs. En effet, le compact disque, et ses générations ultérieures, permettent de transporter un tel code informatique, mais d'une manière statique.

Les Clés Intelligentes offrent la possibilité de faire évoluer ce code informatique, mais également tout un ensemble de fonctionnalités liées à l'intelligence embarquée et au module électronique sécurisé. Ces fonctionnalités peuvent par exemple être liées à la sécurité.

De plus, ces dispositifs permettent d'exécuter des applications informatiques sur un dispositif (appelé dispositif d'exécution) sans s'appuyer sur les ressources logicielles de ce dispositif d'exécution. En effet, le code informatique fourni par la Clé Intelligente ne fait qu'utiliser les ressources électroniques du dispositif d'exécution.

Cela permet d'utiliser un logiciel sur un dispositif sans avoir besoin d'avoir confiance en ce dispositif, et sans laisser de trace car le code informatique exécuté n'est pas stocké sur dispositif d'exécution de manière permanente ou persistante.

Un risque majeur de ce système réside dans le fait que le dispositif d'exécution peu comporter un programme malicieux de type, par exemple, virus informatique ou cheval de Troie.

Au sens strict, un virus informatique est un programme informatique écrit dans le but de se propager à d'autres ordinateurs en s'insérant dans des programmes légitimes appelés « hôtes ». Il peut aussi avoir comme effet, recherché ou non, de nuire en perturbant plus ou moins gravement le fonctionnement de l'ordinateur infecté.

Les chevaux de Troie sont des programmes qui exécutent des actions préjudiciables tout en se présentant à l'utilisateur comme des applications ou des fichiers utiles.

Quel que soit le programme malicieux (« malware » en anglais), il n'est pas rare d'en trouver qui ont comme fonction première de servir de tête de pont. Cette expression désigne un programme qui capture tout ou partie des événements survenus sur l'ordinateur infecté, et les transmet (généralement par internet) à un ordinateur dit attaquant, et inversement. Cette mécanique permet entre autre d'espionner l'ordinateur infecté, mais également de détourner certaines de ces applications.

En effet, dans le cadre de l'utilisation d'un programme issu d'une clé intelligente sur un ordinateur infecté, et où l'ordinateur attaquant possède une copie de ce programme (parce qu'il est légalement en possession d'une clé intelligente similaire, ou bien qu'il s'est procuré le contenu de la mémoire de masse par un moyen quelconque), le malware va permettre à l'ordinateur attaquant, par exemple, de se servir des services de la clé intelligente à l'insu de son propriétaire légitime.

En effet, nous avons défini un tel malware comme étant capable d'espionner les événements survenus sur l'ordinateur infecté, e t de les transmettre à l'ordinateur attaquant, et inversement.

Ainsi, il lui est possible d'espionner les échanges entre l'application qui est exécutée sur l'ordinateur infecté et la clé intelligente qui lui est connectée. Ainsi, il lui est possible de fournir à l'application exécutée sur l'ordinateur attaquant les mêmes informations que celles reçues par l'application qui est exécutée sur l'ordinateur infecté. Cette technique est nommée synchronisation des applications. En retour il est également possible à l'ordinateur attaquant de faire des actions sur son application, et, lorsque celle-ci a besoin des services de la clé intelligente, d'envoyer les requêtes au malware présent sur l'ordinateur infecté, qui les transmet à la clé intelligente en lui faisant croire que cela vient de l'application présente sur l'ordinateur infecté.

Par ce mécanisme de passe-passe, un attaquant va utiliser un service ou une fonctionnalité, fournie par la clé intelligente de sa victime, à l'insu de celle-ci.

La présente invention propose d'empêcher de telles attaques.
procédé de sécurisation, comportant au moins un premier dispositif électronique dit « Clé intelligente », apte à communiquer avec au moins un deuxième dispositif électronique dit « ordinateur », le dispositif électronique « Clé intelligente » comportant au moins un contrôleur, une mémoire de masse dans laquelle est enregistré un premier code informatique exécutable, comportant également l'accès à un second code informatique exécutable appelé Secure Agent, le premier code informatique exécutable étant destiné à être exécuté par le dispositif « ordinateur »,
**caractérisé en ce que** le procédé comprend au moins les étapes de:
- reconnaissance, dans laquelle le contrôleur transmet le premier code exécutable Secure Agent au dispositif « ordinateur », et ordonne son exécution sur le dispositif « ordinateur »,
- collecte, dans laquelle le code Secure Agent collecte des informations liées à tout ou partie des composants électroniques qui composent le dispositif « ordinateur »,
- création (ou génération, les deux termes sont corrects) d'une empreinte du dispositif « ordinateur » à partir des informations collectées,
- sécurisation de tout ou partie des données échangées entre les dispositifs « ordinateur » et « Clé intelligente », à l'aide de l'empreinte.

Dans un mode de réalisation, les informations liées à tout ou partie des composants électroniques qui composent le dispositif « ordinateur » peuvent ê t r e des informations non modifiables.

Ces informations peuvent être par exemple, des numéros de séries, ou bien des caractéristiques techniques.

Selon les modes de réalisation, l'empreinte peut être générée par ledit code Secure Agent, dans un autre mode de réalisation les informations collectées peuvent être transmises au dispositif « Clé intelligente » qui génère l'empreinte, ou bien les informations collectées peuvent être transmises à un dispositif électronique sécurisé SE qui génère l'empreinte.

La création de l'empreinte peut comprendre, en outre, l'usage d'une donnée non fixe, qui peut être un nombre aléatoire.

Selon les modes de réalisation, le procédé selon l'invention peut être mis en oeuvre avant une exécution du premier code exécutable, ou bien pendant l'exécution du premier code exécutable, par exemple déclenché par lui.

D'autres caractéristiques et avantages de l'invention ressortiront clairement de la description qui en est faite ci-après, à titre indicatif et nullement limitatif, en référence aux dessins annexés dans lesquels :
- La figure 1 représente le fonctionnement malveillant d'un malware selon l'art antérieur.
- La figure 2 représente l'implémentation de l'invention.

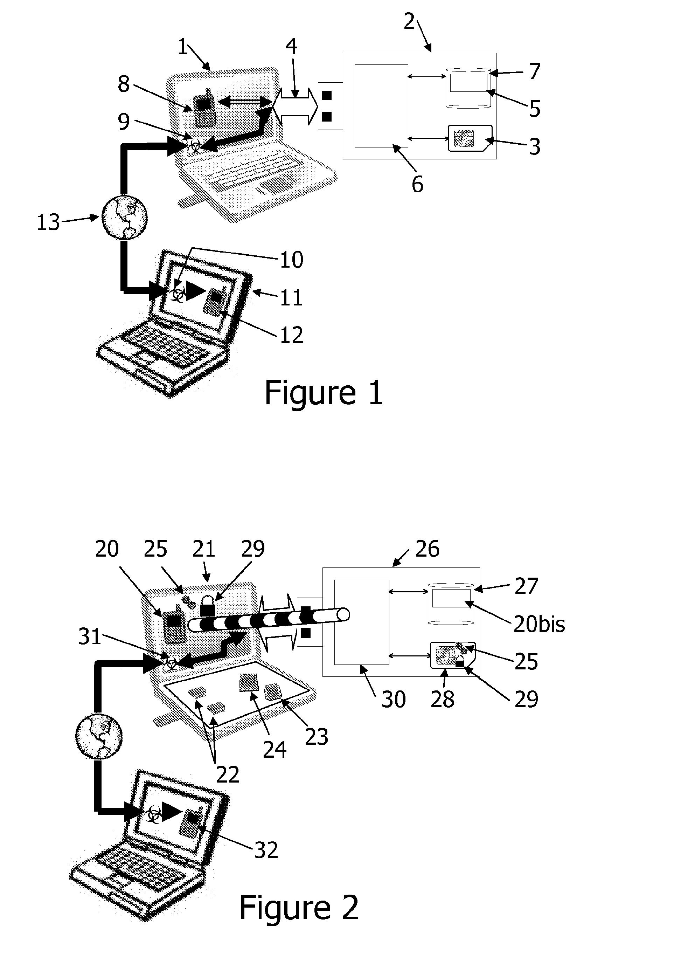

Dans la figure 1, nous pouvons identifier une clé intelligente 2, qui est reliée à un dispositif électronique 1. Ce dispositif est représenté par un ordinateur. Dans un fonctionnement normal du système, l'ordinateur 1 et la clé 2 communiquent au travers d'un canal de communication illustré par la double flèche 4. Ce canal peut être réalisé par n'importe quel protocole de communication informatique.

Ces protocoles peuvent être filaire tel que T-carrier (T1, T3, etc.), RS232, Ethernet, IDE, ... ou bien sans fil tel que infrarouge, wifi, Bluetooth, RFID, ...

Dans un mode préféré d'implémentation de l'invention, la clé et l'ordinateur communiquent au travers du protocole USE (« Universal Serial Bus » en anglais). L'utilisation de ce protocole permet à la clé 2 d'être aisément connectée à un ordinateur individuel tel que l'ordinateur 1 de la figure 1, et reconnue par lui (à travers des logiciels bas-niveau appelés communément "drivers" qui sont présents dans la majorité des systèmes d'exploitations).

Les clés les plus évoluées contiennent un module de sécurité 3 tels qu'une carte à puce.

Afin de gérer aisément les échanges entre la clé 2, l'ordinateur 1 et éventuellement le module sécurisé 3, il est fréquent d'insérer un contrôleur 6 dans les clés intelligentes. Ce contrôleur, illustré par la boite 6 de la figure 1, sous entend la présence, dans la clé intelligente 2 d'au moins un composant de calcul (microprocesseur), d'une mémoire de travail (mémoire volatile), et d'une mémoire non volatile (par exemple RAM ou ROM).

De plus, la clé comporte une mémoire non volatile 7, dite mémoire de masse, qui contient un code informatique exécutable 5 que nous appellerons « application » dans la suite du présent document.

Lors de la connexion de la clé 2 à l'ordinateur 1, la clé reçoit l'énergie nécessaire à son démarrage. Dès lors, le contrôleur 6 entre en communication avec l'ordinateur 1.

Lors de cette phase, le contrôleur initie une session de communication, cela passe, entre autre, par l'identification de la clé par son type de dispositif électronique (unité de stockage de masse, dispositif multimédia ...).

S'engage également une communication au cours de laquelle la clé informe l'ordinateur 1 qu'elle contient une application 5, et que cette application doit être exécutée sur les ressources électroniques de l'ordinateur 1. Cette communication peut se faire avantageusement en identifiant l'application comme un CDROM auprès de l'ordinateur. En effet, à l'insertion d'un CDROM dans un ordinateur, celui-ci s'identifie en tant que tel, et la réponse standard de l'ordinateur (ou plus précisément du système d'exploitation de l'ordinateur) est d'exécuter le contenu, si celui-ci le permet (« démarrage automatique ou autorun en anglais).

Une fois l'application ainsi déclarée auprès de l'ordinateur 1, le contrôleur 6 de la clé 2 envoie l'application 5 à l'ordinateur 1 qui l'exécute 8.

Ce système informatique permet entre autre, l'exécution d'une application 5 sur un ordinateur 1 ne la possédant pas. De plus l'usage du module de sécurité 3 permet de restreindre l'usage de l'application 5 avec les outils cryptographiques les plus perfectionnés. Il est par exemple, possible d'associer, à toute commande invasive pour l'application, une authentification déléguée au module de sécurité (par exemple au travers de l'utilisation d'un code personnel (« PIN code » en anglais).

Dans la figure 1, cette application 8 est représentée par un téléphone car nous illustrerons le fonctionnement de l'invention en prenant l'exemple d'un softphone.

Un softphone est un type de logiciel utilisé pour faire de la téléphonie par Internet depuis un ordinateur plutôt qu'un téléphone. Afin d'assurer un niveau de sécurité optimal, certains softphones fonctionnent avec l'aide d'un dongle externe, généralement USB.

Dans l'exemple illustré par la figure 1, le code 5 du softphone est contenu dans une mémoire non volatile 7 de la clé 2, et délivré à l'ordinateur 1 au travers d'un CDROM. Le module de sécurité 3, contient en outre tous les éléments nécessaires à l'authentification de l'utilisateur sur le réseau de téléphonie. Ces informations sont confidentielles et critiques dans le sens où leur usage entraine une facturation pour l'utilisateur, mais également sa responsabilité. En effet des actions frauduleuses réalisées au travers d'une communication privée entrainent la responsabilité de son propriétaire.

Dans la figure 1, le pictogramme 9 illustre un virus qui est présent dans l'ordinateur 1. Ce virus est en contact, avec son pendant 10 sur l'ordinateur 11 d'un pirate informatique. Le virus peut communiquer par tout moyen, notamment infrarouge, Bluetooth, ..., le moyen le plus fréquent étant l'exploitation d'une éventuelle connexion internet 13.

Afin de mener à bien son attaque, le pirate informatique possède, sur son ordinateur 11 une version 12 de l'application softphone. Il peut être en possession de cette version de l'application par le fait qu'il est en possession lui aussi d'une clé intelligente du même type que la clé 2, mais dont les droits sont par exemple expirés, ou bien par l'obtention illicite de l'application, au travers de téléchargement illégal par exemple.

Afin de pouvoir fonctionner, pour téléphoner dans notre exemple, l'application 12, doit avoir accès à une clé contenant des éléments d'authentifications valides, ce que ne possède pas le pirate.

Le virus 10 va donc entrer en relation avec le virus 9 afin d'exploiter les éléments contenus dans le module sécurisé 3 de la clé 2.

En effet, le virus 10 peut se faire passer pour une clé auprès du softphone 12. Il va ainsi recevoir les communications destinées à une hypothétique clé. Ces informations vont être transmises au virus 9, qui va à son tour les envoyer à la clé 2 en lieu et place du softphone 8. Les informations retournées par la clé 2 suivent le même chemin en sens inverse pour être communiquées au softphone 12.

La figure 2 intègre la présente invention dans ce schéma.

En effet, préalablement au lancement de l'application softphone 20, le procédé selon l'invention calcule une empreinte de l'ordinateur 21. Cette empreinte est basée sur l'électronique de l'ordinateur.

En effet, un dispositif électronique, tel qu'un ordinateur, est composé d'un ensemble de composants électroniques 22, 23, 24. Ces composants sont par définition uniques. En effet, 2 processeurs de même modèle et de la même série se différencient, par exemple par leurs numéros de série, deux mémoires se différencient par leurs numéros de série ou bien l'agencement de leur espace adressable. L'invention consiste en la collecte de ce type d'information, sur certains composants, afin d'obtenir une empreinte unique de notre dispositif 21.

L'utilisation des numéros de série est un mode particulièrement efficace d'implémentation, mais le calcul de performance offre également de très bons résultats.

Le calcul de performance est basé sur le fait que, une même opération (relativement complexe) confiée à deux composants, est réalisée dans des temps légèrement différents. Ces temps sont également des signatures de ces composants.

L'invention propose donc un code informatique exécutable 25, appelé secure agent, qui est chargé de la collecte de ces informations. Ce Secure agent est fournit par la clé 26, et exécuté sur l'ordinateur 21, dont il va analyser les composants 22, 23, 24. Ce secure agent peut être stocké, soit dans une mémoire non volatile 27 de la clé 26, soit dans le module de sécurité 28. Ce secure agent peut également être en charge du calcul de l'empreinte 29, à partir des données recueillies. Selon les modes de réalisation, le secure agent peut être transmis et exécuté dès l'initialisation de la clé intelligente, ou bien ultérieurement, mais dans tous les cas, avant l'utilisation des applications nécessitant le niveau de sécurité apporté par l'invention.

Selon le mode d'implémentation, tous les composants 22, 23, 24, présentant des valeurs caractéristiques peuvent être utilisés. Mais dans un mode préféré d'implémentation, seuls certains composants servent à définir l'empreinte 29. Le choix de ces composants particuliers peut se faire par leur nature, ou bien aléatoirement, ou encore une combinaison de ces techniques.

Par exemple une solution consiste en ce que, lors de l'étape de définition de l'empreinte 29, le secure agent 25 collecte une liste de tout ou partie des composants 22, 23, 24, capables de fournir une valeur caractéristique. Cette liste est transmise à la clé 26 qui va sélectionner un sous ensemble de cette liste, et ainsi définir les composants dont les valeurs vont créer l'empreinte 29.

Un mode particulièrement efficace consiste en un changement régulier de ce sous ensemble, afin de se prémunir d'un espionnage de la communication, et d'un « rejeu ».

Les attaques par « rejeu » (en anglais «replay attack») sont des attaques de type «Man in the middle» consistant à intercepter des paquets de données et à les rejouer, c'est-à-dire les retransmettre tels quels (sans aucun déchiffrement) au serveur destinataire.

Selon les modes d'implémentation de l'invention, le calcul de l'empreinte 29 peut se faire dans l'ordinateur 21, par une partie de l'application 20, dans la clé 26, ou bien dans le module sécurisé 28.

L'utilisation du module sécurisé pour générer l'empreinte permet d'exploiter, lors de cette génération, tout ou partie des moyens cryptographiques embarqués dans le module sécurisé 28.

La génération de l'empreinte à partir des valeurs des composants sélectionnés se fait par l'application d'au moins une fonction mathématique.

Cette fonction doit être reproductible, c'est-à-dire qu'à un ensemble de paramètres d'entrée, la fonction fait correspondre un et un seul résultat.

Il peut être également intéressant de choisir une fonction non inversible, c'est-à-dire qu'à partir du résultat, il ne soit pas possible de retrouver les paramètres d'entrée.

Des exemples particulièrement efficaces de telles fonctions sont par exemple la fonction « ou exclusif », ou bien les fonctions de hachage.

Une fonction de hachage est une fonction, qui, à un élément est capable d'associer une empreinte (aussi appelé haché) en conservant 3 caractéristiques essentielles :
- Il doit être impossible, en partant du haché, de retrouver l'information qui a servi à le générer.
- Il est informatiquement impossible de trouver deux données, quelles qu'elles soient, qui, appliquées à la même fonction de hachage, donnent un même haché.
- A partir d'une donnée et de son haché et d'une fonction de hachage, il est informatiquement impossible de trouver une autre donnée qui ait le même haché.

Les algorithmes SHA-1 (Secure Hash Algorithm 1 : 160 bits), et SHA-2 (SHA-256, SHA-384 ou SHA-512 bits au choix), sont des fonctions de hachage utilisées fréquemment.

Dans un mode préféré d'implémentation de l'invention, la génération de l'empreinte comprend en outre l'utilisation d'une autre valeur. Cette valeur est une valeur non fixe, qui peut être par exemple un nombre aléatoire.

Une fois l'empreinte 29 obtenue, elle doit être partagée par l'application softphone 20 et la clé 26, afin de sécuriser tout ou partie des échanges. C'est généralement le module sécurisé 28 qui conserve et utilise l'empreinte 29 pour la clé 26.

**Dans un mode** particulièrement intéressant d'implémentation de l'invention, et afin d'empêcher l'interception de la communication de cette empreinte 29, le Secure agent 25 est chargée et exécutée sur l'ordinateur 21. Ce secure agent collecte les informations sur tout ou partie des composants 22, 23, 24, de l'ordinateur 21, et les transmets à la clé 26.

La clé 26, avec l'aide du module sécurisé 28, sélectionne un sous ensemble de ces informations, et génère une empreinte 29 comme expliqué ci-avant. Cette empreinte est intégrée au programme 20bis, avant que celui-ci ne soit chargé et exécuté sur l'ordinateur 21. Ainsi, le programme 20 est en connaissance de l'empreinte 29, sans que celle-ci n'ait été échangée directement entre l'ordinateur 21 et la clé 26.

La sécurisation des échanges peut prendre plusieurs formes. En effet, elle peut être à sens unique, ou bien à double sens.

A sens unique, elle ne sera effective que pour les informations par exemple issues de l'application softphone 20 à destination de la clé 26, ou bien inversement.

Dans ce cas, le softphone utilisera l'empreinte 29 sur ses messages, et la clé 26 vérifiera que l'empreinte correcte a été utilisée.

Ensuite, la sécurisation peut, protéger les échanges en terme de confidentialité, ou non.

Si le choix a été fait de se protéger en confidentialité, alors la sécurisation des échanges va prendre la forme d'un chiffrement avec une clé composée totalement ou en partie, de l'empreinte, et un algorithme à clé secrète. Si le choix a été fait de ne pas sécuriser les échanges en terme de confidentialité, alors la sécurisation va prendre la forme de marquage des données échangées afin d'en garantir la provenance. L'apposition de l'empreinte en fin ou en début de donnée peut être une solution dans ce mode d'implémentation. On peut également associer à la donnée à sécuriser un haché de celle-ci prenant en compte l'empreinte 29.

Dans le cas où une donnée, reçue par un des dispositifs du système, ne présente pas la sécurisation attendue, cette donnée sera, dans un mode préféré d'implémentation de l'invention, ignorée. Dans un autre mode de réalisation, cette donnée peut être traitée, mais une information peut être enregistrée pour une analyse ultérieure.

Ainsi, le virus 31, installé sur l'ordinateur 21 ne peut plus relayer les informations de l'application 32 vers la clé 26 car il ne possède pas l'empreinte 29 nécessaire à la sécurisation de ces données.

## Revendications

1. procédé de sécurisation, comportant au moins un premier dispositif électronique (2), apte à communiquer avec au moins un deuxième dispositif électronique (1), ledit dispositif électronique (2) comportant au moins un contrôleur, une mémoire de masse (7) dans laquelle est enregistré un premier code informatique exécutable, l'accès à un second code informatique exécutable appelé Secure Agent (25), ledit code informatique exécutable (5) étant destiné à être exécuté par ledit dispositif (1), **caractérisé en ce que** le procédé comprend au moins les étapes de:
• reconnaissance, dans laquelle ledit contrôleur transmet ledit premier code exécutable Secure Agent (25) au dispositif (1), et ordonne son exécution sur ledit dispositif (1),
• collecte, dans laquelle ledit code Secure Agent (25) collecte des informations liées à tout ou partie des composants électroniques (22, 23, 24) qui composent ledit dispositif (1),
• création d'une empreinte dudit dispositif (1) à partir desdites informations collectées,
• sécurisation de tout ou partie des données échangées entre lesdits dispositifs (1) et (2) à l'aide de ladite empreinte.

2. Procédé selon la revendication 1, **caractérisé en ce que** lesdites informations liées à tout ou partie des composants électroniques (22, 23, 24) qui composent ledit dispositif (1) sont des informations non modifiables.

3. Procédé selon la revendication 2, **caractérisé en ce que** lesdites informations sont des numéros de séries.

4. Procédé selon la revendication 2, **caractérisé en ce que** lesdites informations collectées sont des caractéristiques techniques.

5. Procédé selon l'une quelconque des revendications 1 à 4, **caractérisé en ce que** ladite empreinte (29) est générée par ledit code Secure Agent.

6. Procédé selon l'une quelconque des revendications 1 à 4, **caractérisé en ce que** lesdites informations sont transmises au dispositif (2) qui génère ladite empreinte (29).

7. Procédé selon l'une quelconque des revendications 1 à 4, **caractérisé en ce que** lesdites informations sont transmises à un dispositif électronique sécurisé SE qui crée ladite empreinte (29).

8. Procédé selon l'une quelconque des revendications 5 à 7, **caractérisé en ce que** ladite création de l'empreinte comprend en outre l'usage d'une donnée non fixe.

9. Procédé selon la revendication 8, **caractérisé en ce que** ladite donnée non fixe est un nombre aléatoire.

10. Procédé selon l'une quelconque des revendications 1 à 9, **caractérisé en ce que** ledit procédé est mis en oeuvre avant une exécution dudit premier code exécutable (5).

11. Procédé selon l'une quelconque des revendications 1 à 9, **caractérisé en ce que** ledit procédé est mis en oeuvre pendant l'exécution dudit premier code exécutable (5).

12. Procédé selon la revendication 11, **caractérisé en ce que** ledit procédé est déclenché par ledit premier code exécutable (5).
